# FASCICULE DE BREVET EUROPEEN

(11) **EP 0 924 827 B1**
(45) Date de publication et mention de la délivrance du brevet: **08.07.2009**
(21) Numéro de dépôt: 98410143.6
(22) Date de dépôt: 09.12.1998
(51) Int. Cl.: H02B 13/035

(54) **Cellule à moyenne tension à isolement gazeux, et à tenue diélectrique élevée**
Gasisolierte Mittelspannungsschaltgerätzelle mit erhöhter dielektrischer Festigkeit
Gas-insulated, medium voltage switchgear cell with increased dielectric strength

(30) Priorité: 19.12.1997 FR 9716542
(43) Date de publication de la demande: 23.06.1999
(73) Titulaire: Schneider Electric Industries SAS, 92500 Rueil-Malmaison (FR)
(72) Inventeur: Quenin, Jacques, 38050 Grenoble Cedex 09 (FR); Balsarin, Gabriel, 38050 Grenoble Cedex 09 (FR); Marzocca, Joseph, 38050 Grenoble Cedex 09 (FR); Perrichon, Norbert, 38050 Grenoble Cedex 09 (FR); Furlano, Stephane, 38050 Grenoble Cedex 09 (FR)
(74) Mandataire: Ritzenthaler, Jacques

(56) Documents cités:
- EP-A- 0 592 338
- EP-A- 0 771 057
- DE-A- 4 103 101
- FR-A- 1 566 368
- FR-A- 2 116 851
- FR-A- 2 351 522
- GB-A- 2 040 580

## Description

L'invention est relative à une cellule électrique à moyenne tension, notamment de départ et de protection d'un transformateur, et comprenant:
- un interrupteur connecté à l'amont à un jeu de barres par l'intermédiaire d'un sectionneur amont, et à l'aval à un coupe-circuit à fusible de protection du circuit de départ ,
- des moyens de mise à la terre du circuit de départ,
- et un mécanisme de commande pour piloter les opérations d'ouverture et de fermeture du sectionneur, de l'interrupteur, et des moyens de mise à la terre selon une séquence prédéterminée.

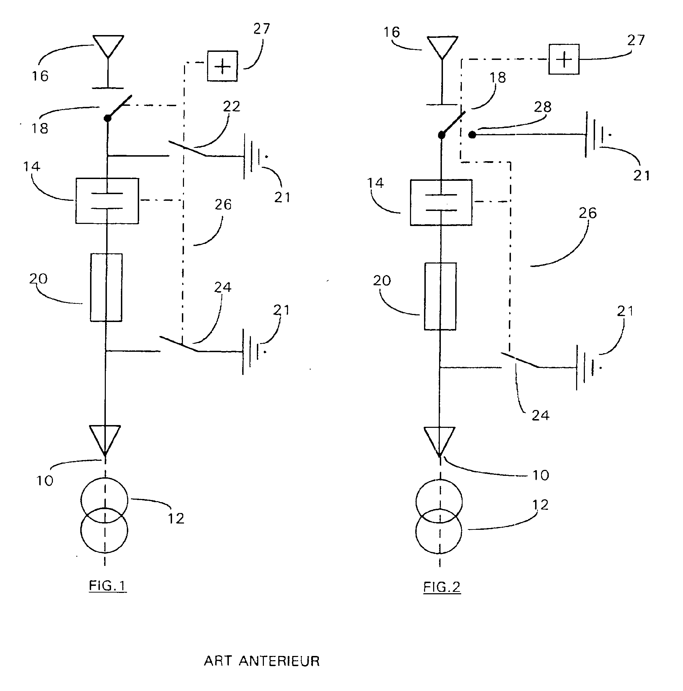

Sur la figure 1 de l'art antérieur, une cellule électrique 10 à moyenne tension de protection d'un transformateur 12 comporte un interrupteur 14 connecté à l'amont à un jeu de barres 16 d'alimentation à travers un sectionneur 18. L'autre borne de l'interrupteur 14 est branchée à un coupe-circuit à fusible 20 destiné à protéger le circuit de départ du transformateur 12 moyenne tension/basse tension en cas d'apparition d'un courant de surcharge ou de court-circuit à la sortie de la cellule 10. Le coupe-circuit à fusible 20 est doté d'une cartouche fusible interchangeable après chaque fusion. L'interrupteur 14 est formé par une ampoule à vide, et le contact mobile du sectionneur 18 peut être connecté à la terre 21 au moyen d'un premier sectionneur de terre 22 appelé sectionneur de terre amont.

La borne de sortie de la cellule 10 peut également être portée au potentiel de la terre 21 au moyen d'un deuxième sectionneur de terre 24 appelé sectionneur de terre aval, lequel est branché directement à la terre. Une liaison mécanique 26 relie cinématiquement les deux sectionneurs de terre 22, 24, lesquels sont entraînés simultanément vers la position de fermeture ou d'ouverture lors de la manoeuvre du mécanisme de commande de la cellule 10. Dans l'exemple de la figure 1, le sectionneur 18 est formé par un sectionneur de ligne à deux positions, à savoir une position de fermeture pour la connexion de l'interrupteur 14 au jeu de barres 16, et une position d'ouverture permettant d'isoler l'interrupteur 14 du jeu de barres 16.

Dans l'exemple de la figure 2, le sectionneur 18 est du type à trois positions, dans lequel le contact mobile 18 se trouve en position d'ouverture dans une position intermédiaire (indiquée sur la figure 2), et peut être branché directement à la terre lorsqu'il vient en engagement avec un plot 28 de mise à la terre. Dans ce cas, le sectionneur de terre 22 amont peut être supprimé. La liaison mécanique 26 est accouplée dans ce cas entre le contact mobile 18 du sectionneur 18, et le sectionneur de terre aval 24.

Au cours de la manoeuvre de fermeture permettant la mise sous tension du transformateur 12, le mécanisme de commande 27 provoque d'abord la fermeture simultanée des deux sectionneurs de terre 22, 24 (figure 1) ou 24, 18 (figure 2) grâce à la tringle commune de la liaison mécanique 26, puis la fermeture de l'interrupteur 14. En cas d'un retour de courant en provenance du transformateur 12, il peut néanmoins se produire un arc électrique aux bornes du deuxième sectionneur de terre 24 aval au moment de sa fermeture. L'interrupteur 14 se trouvant dans l'état ouvert au moment de la fermeture du sectionneur de terre aval 24, empêche toute apparition d'arc aux bornes du sectionneur de terre amont 22 (figure 1), ou entre le contact mobile 18 du sectionneur 18 et le plot de mise à la terre 28 (figure 2). Le risque d'apparition de l'arc sur le sectionneur de terre aval 24 peut également provenir d'un déréglage de la synchronisation entre les différentes tringles de manoeuvre du mécanisme de commande 27.

L'apparition de cet arc lors de la manoeuvre de fermeture est particulièrement dangereuse dans le cas d'une cellule à isolement par un gaz. Il en résulte l'altération du gaz isolant, notamment de l'hexafluorure de souffre SF6, contenu dans l'enveloppe de la cellule, avec un risque de détérioration prématuré de la tenue diélectrique de l'appareillage contenu dans la cellule.

Le document GB 2 040 580 décrit un sectionneur à moyenne tension comprenant un jeu de barre, un commutateur de charge, et des moyens de déconnexion permettant une mise à la terre.

L'objet de l'invention consiste à réaliser une cellule électrique à isolement gazeux ayant une tenue diélectrique élevée et durale.

La cellule selon l'invention est **caractérisée en ce que** les moyens de mise à la terre comportent un deuxième sectionneur aval connecté en parallèle aux bornes du coupe-circuit à fusible, et un plot de raccordement à la terre coopérant soit avec le contact mobile du sectionneur amont à trois positions, soit avec un sectionneur de terre amont pour réaliser la mise à la terre du circuit de départ à travers l'interrupteur lorsque ce dernier est commuté dans l'état fermé.

Selon un mode de réalisation préférentiel, l'interrupteur est formé par une ampoule à vide, logée avec les sectionneurs et/ou le sectionneur de mise à la terre dans une enveloppe renfermant un gaz d'isolement, notamment de l'hexafluorure de soufre.

La mise à la terre aval s'effectue alors sans arc dans le gaz isolant, l'arc de commutation prenant naissance à l'intérieur de l'ampoule à vide lors de la fermeture de ses contacts.

Selon un mode de réalisation préférentiel de l'invention, le deuxième sectionneur aval est relié cinématiquement au sectionneur amont, ou au sectionneur de terre amont par une liaison mécanique à tringle commune.

Le mécanisme de commande est contenu avantageusement dans l'enveloppe, et entraîne directement le contact mobile de l'interrupteur, et le contact mobile du sectionneur, le déplacement de la liaison mécanique étant dérivé du mouvement de pivotement dudit contact mobile du sectionneur.

D'autres avantages ressortiront plus clairement de la description qui va suivre d'un mode de réalisation de l'invention, donné à titre d'exemple non limitatif, et représenté aux dessins annexés, dans lesquels:
- les figures 1 et 2 montrent les schémas électriques de deux cellules de protection selon l'art antérieur;
- la figure 3 représente le schéma électrique d'une cellule à moyenne tension selon l'invention;
- la figure 4 est une vue identique de la figure 3 d'une variante;
- les figures 5 à 7 représentent un mode de réalisation de la cellule selon le schéma de la figure 4, illustré dans différentes positions lors de la séquence de fermeture pour l'alimentation du transformateur.

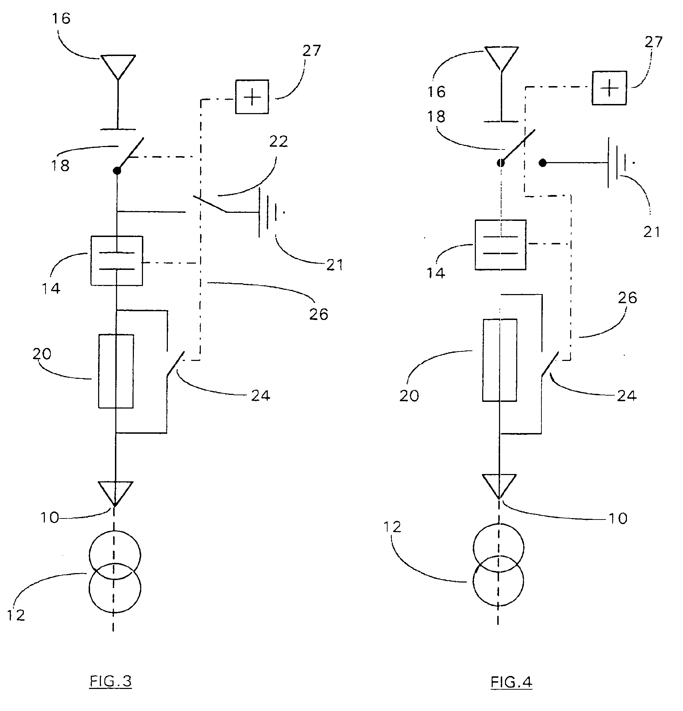

En référence à la figure 3, le schéma électrique de la cellule 10 correspond à celui illustré à la figure 1, mais le deuxième sectionneur de terre 24 aval est branché électriquement en parallèle aux bornes du coupe-circuit à fusible 20, au lieu d'être connecté directement entre la borne de sortie du circuit de départ et la terre 21. Le reste est identique au schéma de la figure 1.

Il en est de même de la cellule 10 de la figure 4, dont le schéma électrique est similaire à celui de la figure 2, la seule différence étant la connexion parallèle du deuxième sectionneur de mise à la terre 24 aval aux bornes du coupe-circuit à fusible 20.

La séquence de fermeture selon la figure 3 est similaire à celle décrite en référence aux figures 1 et 2. Le mécanisme de commande 27 ferme d'abord simultanément les deux sectionneurs de mise à la terre 18, 24, puis l'ampoule à vide de l'interrupteur 14, et ensuite le sectionneur 18. La mise à la terre du circuit de départ s'effectue à travers l'interrupteur 14 lorsqu'il se trouve en position de fermeture. En cas de retour de courant en provenance du transformateur 12, l'arc ne peut pas prendre naissance aux bornes du deuxième sectionneur de mise à la terre 24 en fin de course de fermeture, car à ce moment l'interrupteur 14 est encore en position d'ouverture. L'arc se produit ensuite entre les contacts de l'ampoule à vide lors de la fermeture de l'interrupteur 14. Cet arc reste confiné à l'intérieur de l'ampoule à vide, et ne provoque pas de décomposition de l'hexafluorane de souffre contenu dans l'enveloppe de la cellule 10.

Dans l'exemple de la figure 4, la mise à la terre de la borne de sortie du fusible 20 intervient lorsque le sectionneur 18 amont à trois positions est actionné lui-même vers la terre 21.

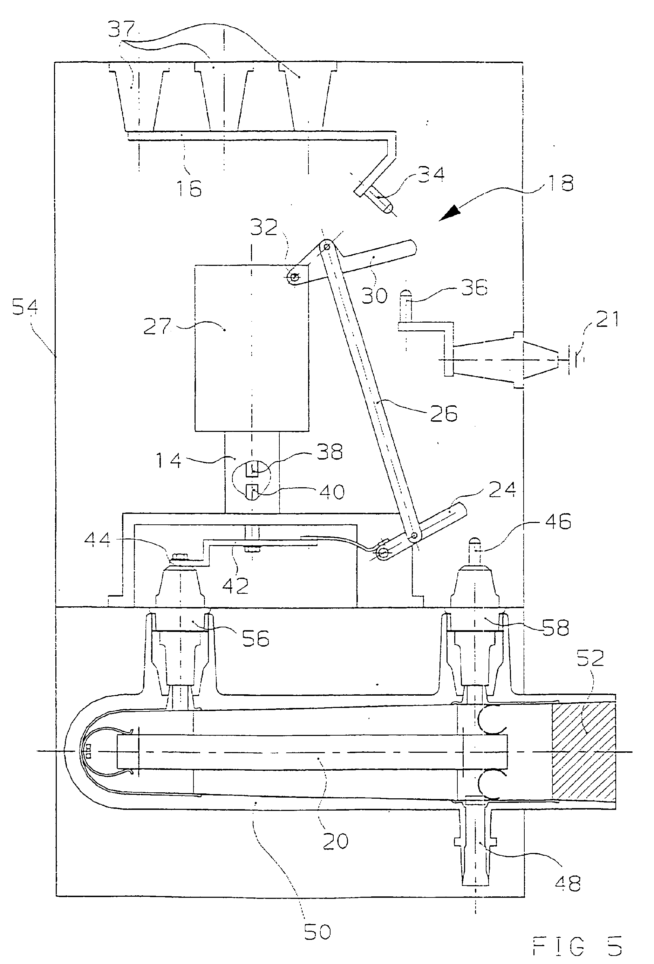

Un mode de réalisation de l'invention conforme au schéma de la figure 4, est illustré à titre d'exemple sur les figures 5 à 7. Les mêmes numéros de référence seront utilisés pour désigner les pièces similaires ou identiques. Le contact mobile 30 à trois positions du sectionneur 18 de tête est monté à pivotement sur un axe 32 du mécanisme de commande 27, lequel actionne le sectionneur 18 et l'interrupteur 14 en une seule manoeuvre. Le contact mobile 30 coopère lors de la phase de fermeture du sectionneur 18 avec un premier plot de raccordement 34 au jeu de barres 16, et lors de la mise à la terre avec un deuxième plot de raccordement 36 à la terre 21. Le jeu de barres 16 est supporté par des isolateurs 37 fixés à la face supérieure de la cellule.

L'ampoule à vide de l'interrupteur 14 comporte un contact mobile 38 actionné par le mécanisme de commande 27 et un contact fixe 40 branché par une liaison électrique 42 à la borne d'entrée 44 du coupe-circuit à fusible 20, et au sectionneur de terre 24 aval. Ce dernier est branché en parallèle entre la borne d'entrée 44 du fusible 20, et le contact fixe 46 du sectionneur de terre 24 en liaison directe avec la borne de sortie 48 de la cellule 10.

Le coupe-circuit à fusible 20 est logé dans un puits 50 à isolement dans l'air, le puits 50 étant obturé par un bouchon 52 autorisant le remplacement de la cartouche en cas de fusion. Le puits fusible 50 est accolé à l'enveloppe 54, et est relié électriquement par des traversées 56, 58 respectivement à la borne d'entrée 54, et au contact fixe 46 du sectionneur de terre 24 aval.

L'enveloppe 54 étanche est remplie de gaz isolant, par exemple du SF6, et sert de logement à l'ensemble des parties actives de la cellule 10, sauf le coupe-circuit à fusible 20. Aucun arc n'apparaît au niveau du sectionneur 18, et du sectionneur de mise à la terre 24 aval, et le gaz d'isolement SF6 n'est pas altéré lors des opérations de manoeuvre d'ouverture ou de fermeture.

La tringle commune de la liaison mécanique 26 est accouplée au contact mobile 30 du sectionneur 18, et à celui du sectionneur de mise à la terre 24.

Le fonctionnement de la cellule 10 selon les figures 5 à 7 est le suivant:

Sur la figure 5, le contact mobile 30 du sectionneur 18 amont se trouve en position intermédiaire d'ouverture. Les contacts 38, 40 de l'interrupteur 14 sont également en position d'ouverture, tout comme le sectionneur de mise à la terre 24 aval.

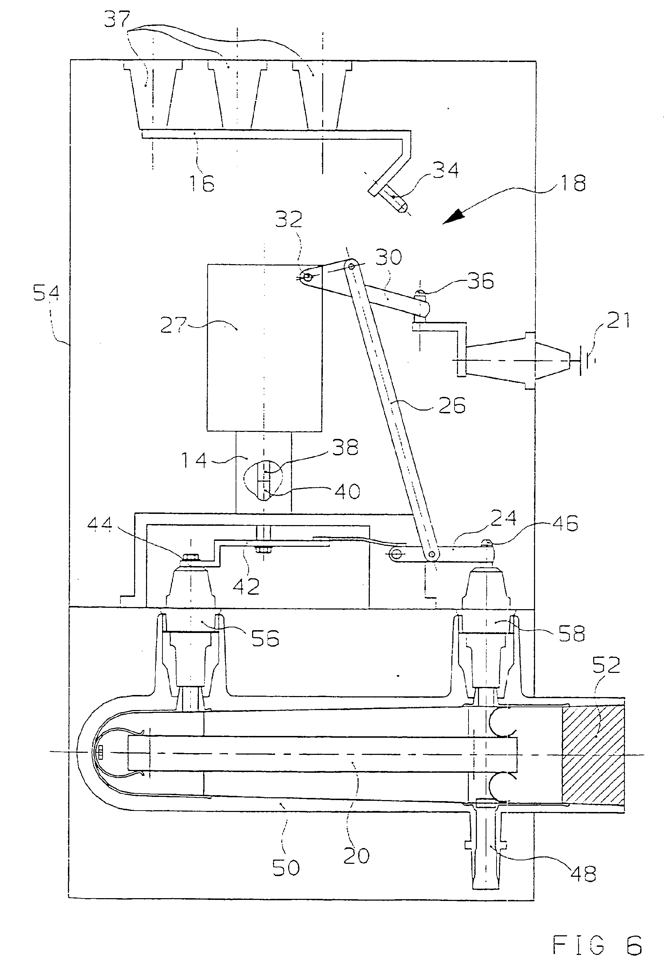

Lors de la phase de fermeture, le mécanisme de commande 27 piloté depuis la face avant par un levier de manoeuvre (non représenté) provoque d'abord la fermeture du sectionneur aval 24, simultanément avec la venue du contact mobile 30 du sectionneur 18 avec le plot 36 de mise à la terre (figure 6). Les contacts 38, 40 de l'interrupteur 14 sont également actionnés vers la position de fermeture, avec éventuellement la naissance d'un arc de commutation à l'intérieur de l'ampoule à vide, dû à un retour de courant en provenance du transformateur 12. Cet arc reste confiné à l'intérieur de l'ampoule à vide, et n'entre pas en contact avec le gaz d'isolement à SF6. Le contact mobile 30 reste en contact avec le plot de raccordement 36 à la terre 21, et la borne de sortie 48 est mise à la terre à travers l'ampoule à vide 14 et le sectionneur 18 amont.

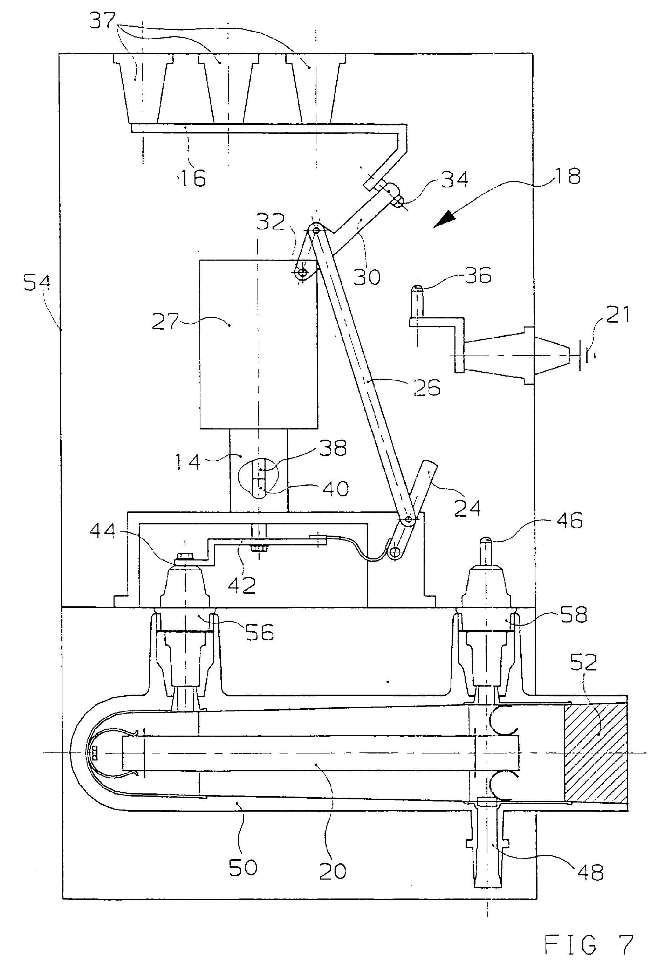

Au cours de la course poursuivie de fermeture, l'interrupteur 14 reste dans l'état fermé, et le mécanisme de commande 27 provoque la fermeture du sectionneur 18 suite à la venue du contact mobile 30 avec le premier plot 34 de raccordement au jeu de barres 16, et l'ouverture simultanée du sectionneur aval 24 (figure 7). Le transformateur 12 est alors alimenté normalement par le jeu de barres 16, et protégé par le coupe-circuit à fusible 20.

Il est clair que l'ampoule à vide de l'interrupteur 14 pourrait être remplacée par tout autre appareillage électrique à enveloppe étanche.

## Revendications

1. Cellule électrique à moyenne tension, notamment de départ et de protection d'un transformateur (12), et comprenant:
- un interrupteur (14) connecté à l'amont à un jeu de barres (16) par l'intermédiaire d'un sectionneur (18) amont, et à l'aval à un coupe-circuit à fusible (20) de protection du circuit de départ ,
- des moyens de mise à la terre du circuit de départ,
- et un mécanisme de commande (27) pour piloter les opérations d'ouverture et de fermeture du sectionneur (18), de l'interrupteur (14), et des moyens de mise à la terre selon une séquence prédéterminée,
les moyens de mise à la terre comportant un deuxième sectionneur (24) aval connecté en parallèle aux bornes du coupe-circuit à fusible (20), et un plot de raccordement (36) à la terre (21) coopérant soit avec le contact mobile du sectionneur amont (18) à trois positions, soit avec un sectionneur de terre (22) amont pour réaliser la mise à la terre du circuit de départ à travers l'interrupteur (14) lorsque ce dernier est commuté dans l'état fermé.

2. Cellule électrique selon la revendication 1, **caractérisée en ce que** l'interrupteur (14) est formé par une ampoule à vide, logée avec les sectionneurs (18, 24) et/ou le sectionneur de mise à la terre (22) dans une enveloppe (54) renfermant un gaz d'isolement, rotamment de l'hexafluorure de soufre.

3. Cellule électrique selon la revendication 2, **caractérisée en ce que** le coupe circuit à fusible (20) est logé dans un puits (50) à isolement dans l'air, accolé à l'enveloppe (54) et raccordé électriquement au deuxième sectionneur (24) aval par des traversés (56, 58) étanches.

4. Cellule électrique selon la revendication 1, **caractérisée en ce que** le deuxième sectionneur (24) aval est relié cinématiquement au sectionneur (18) amont, ou au sectionneur de terre amont (22) par une liaison mécanique (26) à tringle commune.

5. Cellule électrique selon la revendication 4, **caractérisée en ce que** le mécanisme de commande (27) est contenu dans l'enveloppe (54), et entraîne directement le contact mobile (38) de l'interrupteur (14) et le contact mobile (30) du sectionneur (18), le déplacement de la liaison mécanique (26) étant dérivé du mouvement de pivotement dudit contact mobile (30) du sectionneur (18).

6. Cellule électrique selon !a revendication 5, **caractérisée en ce que** le contact mobile (30) du sectionneur (18) est monté à pivotement sur un axe (32) du mécanisme de commande (27), le point d'articulation de la tringle de la liaison mécanique (26) se trouvant entre l'axe (32), et l'extrémité du contact mobile (30) coopérant avec le premier plot (34) de raccordement au jeu de barres (16), et avec le deuxième plot (36) de raccordement à la terre (21).

## Claims

1. A medium-voltage electrical cubicle, in particular a feeder and transformer (12) protection cubicle, comprising:
- a switch (14) connected line-side to a set of bars (16) via a line-side switching disconnector (18) and load-side to a feeder circuit fuse cut-out (20),
- means for earthing the feeder circuit,
- and an operating mechanism (27) to control the opening and closing operations of the switching disconnector (18) of the switch (14), and means for earthing according to a predetermined sequence,
the means for earthing comprising a second load-side switching disconnector (24) connected in parallel to the terminals of the fuse cut-out (20), and a contact pad (36) connecting to earth (21) operating in conjunction either with the movable contact of the three-position line-side switching disconnector (18) or with a line-side earthing switch (22) to perform earthing of the feeder circuit via the switch (14) when the latter is switched to the closed state.

2. The electrical cubicle according to claim 1, **characterized in that** the switch (14) is formed by a vacuum cartridge housed with the switching disconnectors (18, 24) and/or earthing switch (22) in an enclosure (54) containing an insulating gas in particular sulphur hexafluoride.

3. The electrical cubicle according to claim 2, **characterized in that** the fuse cut-out (20) is housed in an air-insulated chamber (50) adjoined to the enclosure (54) and electrically connected to the second load-side switching disconnector (24) by tightly sealed bushings (56, 58).

4. The electrical cubicle according to claim 1, **characterized in that** the second load-side switching disconnector (24) is kinematically linked to the line-side switching disconnector (18) or to the line-side earthing switch (22) by a mechanical link with a common connecting rod.

5. The electrical cubicle according to claim 4, **characterized in that** the operating mechanism (27) is contained in the enclosure (54) and directly drives the movable contact (38) of the switch (14) and the movable contact (30) of the switching disconnector (18), the movement of the mechanical link (26) being derived from the swivelling movement of said movable contact (30) of the switching disconnector (18).

6. The electrical cubicle according to claim 5, **characterized in that** the movable contact (30) of the switching disconnector (18) is mounted pivoting on a swivel-pin (32) of the operating mechanism (27), the articulation point of the connecting rod of the mechanical link (26) being located between the swivel-pin (32) and the end of the movable contact (30) operating in conjunction with the first contact pad (34) for connection to the set of bars (16) and with the second contact pad (36) for connection to earth (21).

## Patentansprüche

1. Mittelspannungs-Schaltzelle, insbesondere Abgangs- und Schutzzelle eines Transformators (12), die
- einen Lastschalter (14), welcher einspeiseseitig über einen vorgeschalteten Trennschalter (18) an eine Sammelschienenanordnung (16) und abgangsseitig an eine Schmelzsicherung (20) zum Schutz des Abgangskreises angeschlossen ist,
- Mittel zur Erdung des Abgangskreises
- sowie einen Schaltmechanismus (27) zur Steuerung der Ein- und Ausschaltvorgänge des Trennschalters (18), des Lastschalters (14) und der Erdungsmittel gemäß einer bestimmten Schaltfolge umfasst,
wobei die Erdungsmittel einen zweiten, parallel zu den Klemmen der Schmelzsicherung (20) angeschlossenen, nachgeschalteten Trennschalter (24) sowie einen Kontaktstift (36) zur Verbindung mit Erde (21) umfassen, der entweder mit dem beweglichen Schaltstück des vorgeschalteten Trennschalters (18) mit drei Schaltstellungen oder mit einem vorgeschalteten Erdungstrenner (22) zusammenwirkt, um die Erdung des Abgangskreises über den Lastschalter (14) zu bewirken, wenn dieser in die Einschaltstellung übergeht.

2. Schaltzelle nach Anspruch 1, **dadurch gekennzeichnet, dass** der Lastschalter (14) als Vakuumschaltrohr ausgebildet ist, das zusammen mit den Trennschaltern (18, 24) und/oder dem Erdungstrenner (22) in einem Gehäuse (54) angeordnet ist, welches ein Isoliergas, insbesondere Schwefelhexafluorid enthält.

3. Schaltzelle nach Anspruch 2, **dadurch gekennzeichnet, dass** die Schmelzsicherung (20) in einem luftisolierten Sicherungsschacht (50) angeordnet ist, welcher an das Gehäuse (54) angebaut und über gasdichte Stromdurchführungen (56, 58) elektrisch mit dem zweiten, nachgeschalteten Trennschalter (24) verbunden ist.

4. Schaltzelle nach Anspruch 1, **dadurch gekennzeichnet, dass** der zweite, nachgeschaltete Trennschalter (24) über eine mechanische Verbindung mit gemeinsamer Betätigungsstange kinematisch mit dem vorgeschalteten Trennschalter (18) oder mit dem vorgeschalteten Erdungstrenner (22) verbunden ist.

5. Schaltzelle nach Anspruch 4, **dadurch gekennzeichnet, dass** der Schaltmechanismus (27) im Inneren des Gehäuses (54) angeordnet ist und das bewegliche Schaltstück (38) des Lastschalters (14) sowie das bewegliche Schaltstück (30) des Trennschalters (18) direkt antreibt, wobei die Verschiebung der mechanischen Verbindung (26) durch die Schwenkbewegung des genannten beweglichen Schaltstücks (30) des Trennschalters (18) erzeugt wird.

6. Schaltzelle nach Anspruch 5, **dadurch gekennzeichnet, dass** das bewegliche Schaltstück (30) des Trennschalters (18) schwenkbar auf einer Achse (32) des Schaltmechanismus' (27) gelagert ist, wobei sich der Gelenkpunkt der Betätigungsstange der mechanischen Verbindung (26) zwischen der Achse (32) und dem Ende des beweglichen Schaltstücks (30) befindet, das mit ersten Kontaktstift (34) zur Verbindung mit der Sammelschienenanordnung (16) und dem zweiten Kontaktstift (36) zur Verbindung mit Erde (21) zusammenwirkt.
